# EUROPEAN PATENT SPECIFICATION

(11) **EP 2 762 637 B1**
(45) Date of publication and mention of the grant of the patent: **07.12.2016**
(21) Application number: 13153667.4
(22) Date of filing: 01.02.2013
(51) Int. Cl.: D21H 27/30, B32B 29/00, D21H 17/67, D21H 21/54

(54) **A multi-layer paperboard comprising agro-industrial residuals**
Mehrschichtige Pappe mit agrarindustriellen Resten
Carton multicouche comprenant des résidus agro-industriels

(43) Date of publication of application: 06.08.2014
(73) Proprietor: Soremartec S.A., 2632 Findel (LU); Ferrero S.p.A., 12051 Alba (Cuneo) (IT)
(72) Inventor: Eva, Piermario, 10024 Moncalieri (Torino) (IT); Hofenauer, Andreas, 82223 Eichenau (DE); Beil, Veronika, 81379 München (DE)
(74) Representative: Rambelli, Paolo

(56) References cited:
- EP-A1- 0 645 491
- EP-A1- 1 088 937
- EP-A2- 1 302 251
- WO-A1-98/54410
- WO-A1-99/18285
- US-A- 5 705 216

## Description

The present invention relates to the field of paper-based packaging materials produced with the use of agro-industrial residuals and particularly to multi-layer paperboards or cardboards, which advantageously exploit specific residuals.

Several proposals have been made to exploit agro-industrial residuals for the production of paper and cardboard products. Some of the proposed processes aim at exploiting the cellulose fibre components of such residuals to provide a pulp usable in paper making.

WO99/18285 describes a process for pulping straw wherein straw chips are treated with steam and water and the resulting mixture is exposed to temperature and pressure to form straw pulp, lignin and hemicellulose when exposed to a rapid decrease in pressure, whereupon a portion of lignin and hemicellulose are separated to finally obtain a usable straw pulp.

US 5 705 216 describes a processes wherein a woody or non-woody biomass is delignified through a continuous extrusion technology, utilising high-pressure steam to form a hydrophobic fibre material for use as an extrusion filler, as a plastic modifier and in the paper making arts. The lignocellulosic biomass can be selected from oat hulls, wheat bran, soy hulls, sunflower hulls, barley corn hulls, beet pulp, peanut hulls, bark, corn cobs, rice straw, etc.

It has also been proposed to convert residues of agro-industrial processes, such as shells, pits and peels into flour for use as a filler, for producing papers and cardboards. EP 1 302 251 describes a process, wherein a residual vegetable material is dried and then subjected to milling and then screened to obtain a flour with an average size of 6-40 µm, which can be used for the production of papers and cardboards.

WO98/54410 A1 describes a multi-layer board which has a middle layer containing CTMP or other similar mechanical pulp and provides for at least one polymer-based coat preventing the transmission of liquids and gases which is made from a polymer dispersion to which talc particles are added.

The present invention is the result of a research project aiming at identifying residual material feedstocks having advantageous properties for use in the production of paper-based packaging materials, as a replacement for cellulose fibres, more particularly, without detrimentally affecting, at least to an undesirable extent, the mechanical properties, such as particularly bending stiffness.

According to the invention, it has been found that a powdery material obtained from dry milling of nut shells, and selected from hazelnut shells, cocoa bean skins and/or cherry pits has bulking properties which makes it particularly suitable for use as organic filler for paperboard manufacture.

It has further been found that by using said powdery material as organic filler in at least one layer of a multi-layer paperboard, it is possible to produce paper-based packaging products with increased bulk, without detrimentally affecting their mechanical properties.

Accordingly, the invention provides a multi-layer paperboard or cardboard, as defined by the appended claims.

In the preferred embodiment of the invention, the multi-layer paperboard comprises at least three layers, namely a top layer, an intermediate layer and a base layer. The terms "top" and "base" are not to be construed in the sense that such layers, as defined in the following description, should constitute the outermost layers of the paperboard structure, rather in the sense that they constitute the external layers with reference to the defined three layers structure. It is in fact understood that the multi-layer paperboard may comprise additional layers, covering the top and base layer, as it is known in the art and further described in the following.

According to the conventional art, the layers of the multi-layer paperboard are made from a fibrous material which is turned into pulp by chemical and/or thermo-mechanical pulping; the fibrous material can either come from fresh (virgin) sources or from recycled waste paper. Raw materials include hardwood, softwood, recycled fibre material (used paper) and possibly fibres from other sources such as sugarcane bagasse, straw, hemp, cotton and other plant products.

According to the invention, at least the intermediate layer comprises cellulose fibres (from the above-mentioned materials) and a powdery filler obtained from nut shells, cocoa bean skins, cherry pits and mixtures thereof. The term nut shells is meant to include hazelnut, walnut, almonds, pecan, Brazil nuts and acorn. Particularly preferred is the use of hazelnut shells.

The powdery filler is obtained, preferably, by dry milling of the shells, skins and pits, followed by screening so as to achieve a particle size, preferably of maximum 300 µm.

The dry milling step may be considered using residuals having their equilibrium moisture content at environmental conditions without the need of a thermal drying step. A TMP/CTMP process may also be used to crush the residual material. The D₅₀ was not found to be critical.

In order to promote the goal to increase bulk and stiffness of the paperboard an average size of e.g. 50-100 µm may be used.

The intermediate layer comprises up to 50% by weight of said powdery filler, preferably from 5 to 40% by weight referred to dry weight of said layer; the balance to 100% (on a day basis) of the weight of the intermediate layer is made of cellulose fibres (and optional additives).

The cellulose fibres may include fibres from recycled waste paper, but preferably consist of chemical-thermo-mechanical pulp (CTMP), thermo mechanical pulp (TMP), ground wood pulp and unbleached chemical pulp (UCP) or mixtures thereof, preferably from virgin fibres; in a preferred embodiment the intermediate layer comprises CTMP and UCP in a weight ratio, preferably of from 8:1 to 1:1. The preferred raw material for CTMP is hardwood or softwood and for UCP it is softwood.

The top layer is preferably consisting of bleached chemical pulp (BCP).

The base layer is preferably consisting of 100% unbleached chemical pulp (UCP); however as an embodiment of the invention said base layer may also comprise the powdery filler, previously described for the intermediate layer, although preferably, in an amount lower than 20% by weight, referred to the dry weight of said layer and more preferably below or equal to 10% by weight.

The term paperboard, as used in the present description, is not to be construed as limited to the ISO standard definition of that term which provides for a basis weight (grammage) above 224 g/m². The term multi-layer paperboard includes e.g. folding boxboard, chipboard, white-lined chipboard and the like. The intermediate layer, which in the structure of the paperboard according to the invention is the one having the highest thickness and grammage, may have a grammage from 100 to 300 g/m² (or gsm). The top layer may have a grammage of from 30 to 100 g/m² and the base layer may have a grammage of from 30 to 100 g/m².

As stated before, the preferred three layer structure may include additional layers. A single, double or triple coating may be applied to the top layer and/or a pigmented layer may be applied to the outer surface of the base layer.

In one embodiment, said pigmented layer may mainly consist of the powdery filler used for the intermediate layer which, due to its particulate nature, provides a pleasant visual appearance.

In general, the overall grammage of the multi-layer paperboard of the invention may be in the range of from 160 to 450 g/m² (ISO 536).

The multi-layer paperboard of the invention may be produced with the use of a conventional continuous paper machine. A retention agent, particularly polyacrylamide retention agents, may be added to improve retention of the fillers within the intermediate and base layer, when used in the latter.

The addition of cationic starch, particularly in the intermediate layer, may be contemplated to improve the interlaminar strength (Scott Bond).

The residuals used according to the invention are characterised over other residuals which have been proposed for use in paper making in that, upon dry milling, they do not have substantially a fibre potential and fibre shape. Accordingly, in view of their coarse particle structure, they were found to constitute a particularly beneficial filler for multi-layer paperboards. Their major effect is the relevant increase of the thickness for a given grammage with respect to a reference multi-layer paperboard made from virgin fibres and having the same structure and composition of the inventive multi-layer paperboard and not including a filler.

Particularly, the hazelnut residuals were found to provide for a relevant increase in bending stiffness. The advantages relating to the use of such residuals in multi-layer paperboard is further shown by the following examples.

### Example 1

Variants of multi-layer boards that contain 30% wt. hazelnut shells or cocoa bean skins in the intermediate layer and 10% wt. hazelnut shells in the base layer have been produced with the use of laboratory equipment. In addition, multi-layer boards were produced containing 30% wt. residuals in the intermediate layer only. The following variants were produced:

| **Item #** | **Label** | **Residuals in intermediate layer (%) wt.** | **Residuals in base layer (%) wt.** |
|---|---|---|---|
| 1 | Reference | -- | -- |
| 2 | HNS++ | hazelnut 30% | hazelnut 10% |
| 3 | KBS++ | cocoa bean skins 30% | hazelnut 10% |
| 4 | HNS+ | hazelnut 30% | -- |
| 5 | KBS+ | cocoa bean skins 30% | -- |

All variants were coated with a standard offset coating (25 g/m²) on the top layer and a coating of hazelnut shell powder (30 g/m²) on the base layer. The structure of the multi-layer board is shown in the scheme below:

| | |
|---|---|
| Double coating | 25 g/m² |
| 100% bleached chemical pulp | 45 g/m² |
| 70% CTMP and unbleached chemical pulp, 30% residuals | 110 g/m² |
| 90% unbleached chemical pulp, 10% residuals (items 2, 3) 100% unbleached chemical pulp (items 1, 4, 5) | 30 g/m² |
| pigmentation, hazelnut shell powder | 30 g/m² |

More particularly, the formulations of the developed multi-layer boards are shown in the following table:

| **Variant** | **Residual** | **Fibre** | **Retention agent** |
|---|---|---|---|
| Reference | top: -- | top: BCP 100% | Percol 540 |
| | intermediate: -- | intermediate: CTMP 80% | 0.05% |
| | base: -- | UCP 20% | |
| | | base: UCP 100% | |
| HNS++ | top: -- | top: BCP 100% | Percol 540 |
| | intermediate: hazelnut 30% | intermediate: CTMP 80% | 0.05% |
| | base: hazelnut 10% | UCP 20% | |
| | | base: UCP 100% | |
| KBS++ | top: -- | top: BCP 100% | Percol 540 |
| | intermediate: cocoa bean skins 30% | intermediate: CTMP 80% | 0.05% |
| | | UCP 20% | |
| | base: hazelnut 10% | base: UCP 100% | |
| HNS+ | top: -- | top: BCP 100% | Percol 540 |
| | intermediate: hazelnut 30% | intermediate: CTMP 80% | 0.05% |
| | base: -- | UCP 20% | |
| | | base: UCP 100% | |
| KSB+ | top: -- | top: BCP 100% | Percol 540 |
| | intermediate: cocoa bean skins 30% | intermediate: CTMP 80% | 0.05% |
| | | UCP 20% | |
| | base: -- | base: UCP 100% | |

### Preparation of the raw materials

### Fibres

The fibre component was prepared by whipping by standard procedure before using in hand-sheet making: 10 min disintegrator; used at a concentration of 1:200.

### Hazelnut shells

Hazelnut shells were ground to 100 µm maximum particle size and a slurry was prepared by dispersing in water with stirring.

### Cocoa bean skins

The cocoa bean skins were subjected to mechanical treatment (disintegrator, 4000 rpm, 60 min) and a slurry was prepared by dispersing in water with stirring.

### Retention agent

The retention agent Percol 540 (BASF, polyacrylamide based) was used in all experiments in the amount of 0.05% wt. 0.5 g of Percol was dissolved in 1000 mg of tap water and the pH was set to 5 with diluted sulphuric acid for stabilisation.

The obtained multi-layer boards were characterised in respect of:
- grammage (ISO 536);
- thickness (ISO 534);
- bending stiffness (DIN 53121); and
- interlaminar strength (Scott Bond).

The total retention level was found very high (> 91 %).

All boards were designed to have a grammage of 240 g/m².

The thickness measurement shows that the addition of hazelnut shell powder in the intermediate layer and base layer results in a significant increase in board thickness (+ 15%). This effect can also be observed when the cocoa bean skins are added; yet, the effect is less significant in this case (+ 4%).

| | **Thickness (µm)** |
|---|---|
| **Reference** | 401 |
| **HNS+** | 462 |
| **HNS++** | 463 |
| **KBS+** | 417 |
| **KBS++** | 428 |

The addition of hazelnut shell powder unexpectedly increased the bending stiffness observed for the multi-layer boards significantly, with respect to the reference board; the addition of cocoa bean skins, on the other hand, slightly decreased the bending stiffness.

| | **Bending stiffness (N mm)** |
|---|---|
| **Reference** | 18.2 |
| **HNS+** | 23.3 |
| **HNS++** | 20.1 |
| **KBS+** | 13.1 |
| **KBS++** | 14.6 |

It was found that the decrease of bending stiffness observed with the use of cocoa bean skins was due to a relatively large number of large particles in the cocoa beans skins slurry. Thus, whereas the hazelnut residuals had a D₅₀ equal to about 27 µm and a maximum particle size lower than 100 µm, resulting from sieving, the cocoa bean skins used in this test had a D₅₀ of about 58.6 µm with a maximum size of about 500 µm.

Optimisation of the particle size distribution, as shown by the following example 2, resulted in the achievement of mechanical properties (bending stiffness) substantially corresponding to those obtained with the use of hazelnut shells.

The internal bond strength refers to the strength of the bonds between separate (fibrous) layers of the multi-layer boards. The Scott Bond test determines the energy needed to separate these layer.

All samples showed a slight decrease in interlaminar strength in respect of the reference sample. However, since the decrease in interlaminar strength only amounts to about 7%, it does not result to be significant and does not detrimentally affect the mechanical properties of the multi-layer board.

### Example 2

In a further set of experiments, cocoa bean skins have been subjected to a dry milling process with the use of a ball mill SKM 400, equipped with 250 µm screen and of a hammer mill Record A, equipped with 300 µm screen. The dry milling process yielded milled material with particle sizes smaller than 250 µm and 300 µm respectively.

Variants of multi-layer boards containing 30% wt. hazelnut shells or 20% wt. cocoa bean skins in the intermediate layer were produced. A starch treatment was added in order to improve interlaminar strength. The starch was added in the process or after the sheet formation via spraying. Four variants of multi-layer boards have been produced, as shown in the following table.

| **Item #** | **Label** | **Residuals in intermediate layer (%) wt.** | **Starch treatment** |
|---|---|---|---|
| 1 | F_HNS_K_MS | hazelnut 30% | in process |
| 2 | F_KBS_K_MS | cocoa bean skins 20% | in process |
| 3 | F_HNS_K_SS | hazelnut 30% | sprayed |
| 4 | F_KBS_K_SS | cocoa beans skins 20% | sprayed |

The formulations of the produced multi-layer board is summarised in the following table.

| **Variant** | **Residual** | **Fibre** | **Retention agent** | **Starch** |
|---|---|---|---|---|
| F_HNS_K_MS | top: -- | top: BCP 100% | Percol 540 | Cargill Bond |
| | interm.: hazelnut 30% | interm.: CTMP 80% | 0.05% | HR 05946, cationic |
| | base: -- | UCP 20% | | 1% |
| | | base: UCP 100% | | |
| F_KBS_K_MS | top: -- | top: BCP 100% | Percol 540 | Cargill Bond |
| | interm.: cocoa bean skins 20% | interm.: CTMP 80% | 0.05% | HR 05946, cationic |
| | base: -- | UCP 20% | | 1% |
| | | base: UCP 100% | | |
| F_HNS_K_SS | top: -- | top: BCP 100% | Percol 540 | Cargill Bond |
| | interm.: hazelnut 30% | interm.: CTMP 80% | 0.05% | HR 05946, cationic |
| | base: -- | UCP 20% | | 1% |
| | | base: UCP 100% | | |
| F_KBS_K_MS | top: -- | top: BCP 100% | Percol 540 | Cargill Bond |
| | interm.: cocoa bean skins 20% | interm.: CTMP 80% | 0.05% | HR 05946, cationic |
| | base: -- | UCP 20% | | 1% |
| | | base: UCP 100% | | |

The preparation of the raw material was carried out according to the procedure defined in example 1. In the test, cocoa bean skins dry milled to 300 µm maximum particle size were used. The hazelnut shells were ground to 100 µm maximum particle size as in example 1.

The starch solution was prepared by dissolving cationic starch in tap water and stirring for 60 min (95°C); the solution was further diluted with tap water to 1% and stirred for 20 min.

The total retention level of the filler was very high (> 93%).

All boards were designed to have a grammage of 210 g/m², to be comparable with the multi-layer boards without coating from example 1 above. Samples containing hazelnut shells exceeded the target of 210 g/m² and were thus slightly thicker than the cocoa bean skins boards which were exactly at 210 g/m².

| | **Grammage (g/m²)** | **Thickness (µm)** |
|---|---|---|
| F_HNS_K_MS | 223 | 428 |
| F_HNS_K_SS | 220 | 420 |
| F_KBS_K_MS | 210 | 361 |
| F_KBS_K_SS | 212 | 358 |

The multi-layer boards containing cocoa bean skins from the dry milling process only show a subtle decrease in bending stiffness compared to multi-layer boards containing hazelnut shells. This was probably due to a geometric effect, since the boards are also thinner.

| | **Grammage (g/m²)** | **Thickness (µm)** | **Bending stiffness (N mm)** |
|---|---|---|---|
| F_HNS_K_MS | 223 | 428 | 19.9 |
| F_HNS_K_SS | 220 | 420 | 19.9 |
| F_KBS_K_MS | 210 | 361 | 13.7 |
| F_KBS_K_SS | 212 | 358 | 15.4 |

The starch treatment increased the interlaminar strength of the multi-layer boards. This effect was found significantly stronger when 1% of starch was applied in mass during the paper making process than when 1% starch was sprayed in the individual layer of the multi-layer board before the wet couching.

The comparison with the virgin fibre reference without filler and starch treatment shows that the starch treatment obviates to a decline of the interlaminar strength caused by the insertion of filler material in the intermediate layer.

Compared to boards containing hazelnut shells or cocoa bean skins in the intermediate layer (example 1), the effect was even more apparent. The interlaminar strength increased significantly, due to the starch treatment.

Both starch treatment results in an increasing interlaminar strength; however, adding starch in the process has a greater impact and seems to be preferable.

| | **Interlaminar strength (J/m²)** |
|---|---|
| virgin fibre ref. | 121 |
| HNS ref. (Ex 1) | 76 |
| F_HNS_K_MS | 164 |
| F_HNS_K_SS | 101 |
| KBS ref. (Ex 1) | 113 |
| F_KBS_K_MS | 186 |
| F_KBS_K_SS | 132 |

Similar results in terms of bulking properties and mechanical properties were obtained with the use of cherry pits dry milled to 300 µm maximum partial size.

### Example 3

Further tests, carried out within the experimental program, have shown that dry milling of the raw materials consisting of hazelnut shells, cocoa bean skins and cherry pits constitutes a viable pre-treatment to obtain a powdery filler usable in standard paper machines.

The trial program has shown that all such materials can be processed continuously on a pilot plant paper machine and are expected to be also processable on standard paper machines.

The tests carried out with the use of the pilot plant paper machine with the production of duplex board, wherein the hazelnut and cocoa bean residuals were used in amounts ranging from 5 to 40% wt. in one of the layers corresponding to the intermediate layer of the structure identified in example 1, confirmed that the three layer structure is to be considered as particularly preferred to achieve the bulking effect while not decreasing the mechanical properties.

## Claims

1. A multi-layer paperboard, comprising a top layer, an intermediate layer and a base layer comprising cellulose fibre material, **characterised in that** at least said intermediate layer comprises a powdery filler material selected from the group consisting of hazelnut shells, cocoa bean skins, cherry pits and mixtures thereof.

2. A multi-layer paperboard according to claim 1, wherein said intermediate layer comprises from 5% to 50% by wt. of said powdery filler, referred to the dry weight of said layer.

3. A multi-layer paperboard according to claims 1 or 2, wherein said base layer comprises up to 20% by wt. of said powdery filler referred to the dry weight of said base layer.

4. A multi-layer paperboard according to any of claims 1 to 3, wherein said powdery filler has a maximum particle size lower than 300 µm.

5. A multi-layer paperboard according to any of claims 1 to 4, wherein said intermediate layer comprises unbleached chemical pulp, chemico-thermo-mechanical pulp, thermo mechanical pulp, groundwood pulp or mixture thereof, and said powdery filler.

6. A multi-layer paperboard according to claim 5, comprising unbleached chemical pulp and thermo-mechanical pulp in a weight ratio of from 8:1 to 1:1.

7. A multi-layer paperboard according to any of claims 1 to 4, wherein said intermediate layer comprises cellulose fibres from recycled waste paper.

8. A multi-layer paperboard according to any of the preceding claims, wherein said top layer is made from bleached chemical pulp or cellulose fibres from recycled waste paper and mixtures thereof.

9. A multi-layer paperboard according to any of the preceding claims, wherein said base layer comprises unbleached chemical pulp or cellulose fibres from recycled waste paper.

10. A multi-layer paperboard according to any of the preceding claims, comprising an offset coating on top of said top layer.

11. A multi-layer paperboard according to any of the preceding claims, further comprising a pigmented layer applied on the external surface of said base layer.

12. A multi-layer paperboard according to any of the preceding claims, wherein said layers comprise a polyacrylamide-based retention agent.

13. A multi-layer paperboard according to any of the preceding claims, wherein said layers further comprise cationic starch.

## Patentansprüche

1. Mehrschichtige Pappe, umfassend eine obere Schicht, eine Zwischenschicht und eine Basisschicht, umfassend ein Zellulosefasermaterial, **dadurch gekennzeichnet, dass** die Zwischenschicht ein pulverförmiges Füllstoffmaterial enthält, ausgewählt aus der Gruppe bestehend aus Haselnusshüllen, Kakaobohnenhäuten, Kirschkernen und Mischungen davon.

2. Vielschichtige Pappe nach Anspruch 1, worin die Zwischenschicht von 5 bis 50 Gew.-% des pulverförmigen Füllstoffes in Bezug auf das Trockengewicht der Schicht enthält.

3. Vielschichtige Pappe nach Anspruch 1 oder 2, worin die Basisschicht bis zu 20 Gew.-% des pulverförmigen Füllstoffes in Bezug auf das Trockengewicht der Basisschicht enthält.

4. Vielschichtige Pappe nach einem der Ansprüche 1 bis 3, worin der pulverförmige Füllstoff eine maximale Teilchengröße von weniger als 300 µm hat.

5. Vielschichtige Pappe nach einem der Ansprüche 1 bis 4, worin die Zwischenschicht nicht gebleichte chemische Pulpe, chemothermomechanische Pulpe, thermomechanische Pulpe, holzhaltige Pulpe oder Mischungen davon und den pulverförmigen Füllstoff enthält.

6. Vielschichtige Pappe nach Anspruch 5, umfassend nichtgebleichte chemische Pulpe und thermomechanische Pulpe in einem Gewichtsverhältnis von 8:1 bis 1:1.

7. Vielschichtige Pappe nach einem der Ansprüche 1 bis 4, worin die Zwischenschicht Zellulosefasern aus recyceltem Abfallpapier enthält.

8. Vielschichtige Pappe nach einem der vorhergehenden Ansprüche, worin die obere Schicht aus gebleichter chemischer Pulpe und Zellulosefasern aus recyceltem Abfallpapier und Mischungen davon erzeugt ist.

9. Vielschichtige Pappe nach einem der vorhergehenden Ansprüche, worin die Basisschicht nicht gebleichte chemische Pulpe oder Zellulosefasern aus recyceltem Abfallpapier enthält.

10. Vielschichtige Pappe nach einem der vorhergehenden Ansprüche, umfassend eine Offsetbeschichtung auf der oberen Seite der oberen Schicht.

11. Vielschichtige Pappe nach einem der vorhergehenden Ansprüche, weiterhin umfassend eine pigmentierte Schicht, die auf die externe Oberfläche der Basisschicht aufgetragen ist.

12. Vielschichtige Pappe nach einem der vorhergehenden Ansprüche, worin die Schichten ein Retentionsmittel auf Polyacrylamidbasis enthalten.

13. Vielschichtige Pappe nach einem der vorhergehenden Ansprüche, worin die Schichten weiterhin kationische Stärke enthalten.

## Revendications

1. Carton multicouche, comprenant une couche supérieure, une couche intermédiaire et une couche de base comprenant un matériau à base de fibres de cellulose, **caractérisé en ce qu'**au moins ladite couche intermédiaire comprend un matériau de charge pulvérulente choisi dans le groupe constitué de coques de noisettes, de peaux de fèves de cacao, de noyaux de cerises et de mélanges de ceux-ci.

2. Carton multicouche selon la revendication 1, dans lequel ladite couche intermédiaire comprend de 5 % à 50 % en poids de ladite charge pulvérulente, par rapport au poids sec de ladite couche.

3. Carton multicouche selon la revendication 1 ou 2, dans lequel ladite couche de base comprend jusqu'à 20 % en poids de ladite charge pulvérulente par rapport au poids sec de ladite couche de base.

4. Carton multicouche selon l'une quelconque des revendications 1 à 3, dans lequel ladite charge pulvérulente a une taille maximale de particules inférieure à 300 µm.

5. Carton multicouche selon l'une quelconque des revendications 1 à 4, dans lequel ladite couche intermédiaire comprend de la pâte chimique écrue, de la pâte chimico-thermomécanique, de la pâte thermomécanique, de la pâte mécanique de défibreur ou un mélange de celles-ci, et ladite charge pulvérulente.

6. Carton multicouche selon la revendication 5, comprenant de la pâte chimique écrue et de la pâte thermomécanique dans un rapport en poids de 8:1 à 1:1.

7. Carton multicouche selon l'une quelconque des revendications 1 à 4, dans lequel ladite couche intermédiaire comprend des fibres de cellulose issues de déchets de papier recyclés.

8. Carton multicouche selon l'une quelconque des revendications précédentes, dans lequel ladite couche supérieure est composée de pâte chimique blanchie ou de fibres de cellulose issues de déchets de papier recyclés et de mélanges de celles-ci.

9. Carton multicouche selon l'une quelconque des revendications précédentes, dans lequel ladite couche de base comprend de la pâte chimique écrue ou des fibres de cellulose issues de déchets de papier recyclés.

10. Carton multicouche selon l'une quelconque des revendications précédentes, comprenant un revêtement offset au-dessus de ladite couche supérieure.

11. Carton multicouche selon l'une quelconque des revendications précédentes, comprenant en outre une couche pigmentée appliquée sur la surface externe de ladite couche de base.

12. Carton multicouche selon l'une quelconque des revendications précédentes, dans lequel lesdites couches comprennent un agent de rétention à base de polyacrylamide.

13. Carton multicouche selon l'une quelconque des revendications précédentes, dans lequel lesdites couches comprennent en outre de l'amidon cationique.
